Europäisches Patentamt

European Patent Office

Office européen des brevets

(11) Veröffentlichungsnummer : **0 489 051 B1**

(12) **EUROPÄISCHE PATENTSCHRIFT**

(45) Veröffentlichungstag der Patentschrift :
22.11.95 Patentblatt 95/47

(51) Int. Cl.⁶ : **G01F 23/28**

(21) Anmeldenummer : **90912358.0**

(22) Anmeldetag : **22.08.90**

(86) Internationale Anmeldenummer :
**PCT/DE90/00640**

(87) Internationale Veröffentlichungsnummer :
**WO 91/02950 07.03.91 Gazette 91/06**

(54) **MESSEINRICHTUNG UND VERFAHREN ZUR BESTIMMUNG DES FÜLLSTANDES IN FLÜSSIGKEITSBEHÄLTERN, VORZUGSWEISE FÜR TANKANLAGEN.**

(30) Priorität : **22.08.89 DE 8911548 U**

(43) Veröffentlichungstag der Anmeldung :
**10.06.92 Patentblatt 92/24**

(45) Bekanntmachung des Hinweises auf die
Patenterteilung :
**22.11.95 Patentblatt 95/47**

(84) Benannte Vertragsstaaten :
**AT BE CH DE ES FR GB IT LI NL**

(56) Entgegenhaltungen :
**EP-A- 0 106 677
EP-A- 0 138 541
DE-A- 3 714 520
US-A- 4 815 323
JOURNAL OF PHYSICS E. SCIENTIFIC IN-
STRUMENTS vol. 16, no. 10, Oktober 1983,
DORKING, GB Seiten 959 - 963; R.C. ASHER:
"ULTRASONIC SENSORS IN THE CHEMICAL
AND PROCESS INDUSTRIES" siehe Seite 960,
linke Spalte, letzter Absatz siehe Seite 960,
rechte Spalte, letzter Absatz Seite 961, linke
Spalte, Absatz 1
MECANIQUE ELECTRICITE vol. 51, no. 206,
Januar 1967, Seiten 23 - 27; M.P. FRANCHI:
"APPLICATIONS INDUSTRIELLES DES UL-
TRASONS" siehe Seite 24, linke Spalte, Absatz 6 siehe Seite 26, linke Spalte, Absatz 1 -
Seite 27, linke Spalte, Absatz 1; Figuren 1, 4-7
OIL & GAS JOURNAL vol. 87, no. 1, 02 Januar
1989, TULSA, OK, US Seiten 39 - 44; O. ED-
VARDSSON: "RADAR USED TO MEASURE
TANK HYDROCARBON LIQUID LEVEL" siehe
Seite 39, rechte Spalte, Absatz 3; Figur 1**

(56) Entgegenhaltungen :
**PATENT ABSTRACTS OF JAPAN vol. 8, no. 79
(P-267)(1516) 11 April 1984, & JP-A-58 223023
I.E.E.E. TRANSACTIONS ON ULTRASONICS,
FERROELECTRICS AND FREQUENCY
CONTR. vol. UFF34, no. 2, März 1987, IEEE,
NEW YORK, US Seiten 212 - 224; S.A. JACOB-
SON ET AL: "LOW-GRAVITY SENSING OF
LOQUID/VAPOR INTERFACE AND TRAN-
SIENT LIQUID FLOW" siehe Seite 222, linke
Spalte; Figur 4
TECHNISCHES MESSEN T.M. vol. 51, no. 9,
September 1984, MÜNCHEN, DE Seiten 313 -
317; H. NÖLL: "MESSWERTVERARBEITUNG
IN ULTRASCHALL-FU-
̈LLSTANDMESSGERÄTEN" siehe Seite 316,
Absatz 4.2**

(73) Patentinhaber : **SIEMENS
AKTIENGESELLSCHAFT
Wittelsbacherplatz 2
D-80333 München (DE)**

(72) Erfinder : **DÄGES, Johannes
Kreuzbühlstr. 5
D-8620 Lichtenfels (DE)**
Erfinder : **RÜTTEL, Martin
St. Marien-Str. 16
D-8621 Grub a. Forst (DE)**

**Beschreibung**

Die Erfindung betrifft eine Füllstandsmeßeinrichtung für Behälter, die mit Flüssigkeit gefüllt sind, vorzugsweise für Tanks von Tankanlagen, mit Bestimmung der Füllstandshöhe aus der Schallaufzeit von Ultraschallimpulsen, die entlang einer vom Bodenbereich des Behälters bis zur Flüssigkeitsoberfläche reichenden Hauptmeßstrecke von ersten Schallimpulssendern abgestrahlt und von der Flüssigkeitsoberfläche zu ersten Schallimpulsempfängern reflektiert werden.

Eine solche Füllstandsmeßeinrichtung ist durch die EP-A3-0 106 677 bekannt. Sie arbeitet nach dem Prinzip von Echolotanlagen. Dabei werden Streckenlängen aus der Laufzeit von Schallimpulsen abgeleitet. Diese Laufzeit oder Laufzeitdifferenz ergibt sich jeweils durch die gemessene Zeitdifferenz, die vom Aussenden eines Ultraschallimpulses bis zum Empfang des von der Flüssigkeitsoberfläche reflektierten Ultraschallimpulses vergeht. Dabei werden die Schallimpulssender und Schallimpulsempfänger bevorzugt als Sende/Empfangs-Prüfköpfe ausgebildet, die sowohl zum Senden als auch zum Empfangen von Ultraschallimpulsen geeignet sind. Die Schallgeschwindigkeit in einem Flüssigkeitsvolumen ist dichteabhängig. Um eine durchschnittliche, dichtekorrigierte Schallgeschwindigkeit im Flüssigkeitsvolumen zu erhalten, sind bei der bekannten Füllstandsmeßeinrichtung über die Füllstandshöhe verteilte Bezugs-Reflektoren mit definiertem Abstand untereinander und zu den Schallimpulssendern und -empängern angeordnet. Die an den Bezugs-Reflektoren reflektierten Ultraschallimpulse ergeben Laufzeitdifferenzen, die zusammen mit den zugehörigen bekannten Schallweglängen zur Ermittlung einer durchschnittlichen, die Dichte im Flüssigkeitsvolumen berücksichtigenden Schallgeschwindigkeit dienen. Zusätzlich ist im unteren Bereich des Behälters ein Temperatursensor angeordnet, mit dem die Flüssigkeitstemperatur an einer Stelle ermittelt werden kann. Außerdem ist die Berechnung einer Durchschnittstemperatur des Flüssigkeitsvolumens vorgesehen. Die Durchschnittstemperatur wird benötigt, um die Dichte und damit den Behälterinhalt bei ermittelter Füllstandshöhe berechnen zu können. Zur Berechnung der Durchschnittstemperatur wird von bekannten linearen Kennlinien $\Delta v/\Delta T$ ausgegangen, welche die Änderung der Schallgeschwindigkeit in Abhängigkeit von der Temperaturänderung angeben. Dieser bekannte Quotient kann dann einem durch Messung ermittelten Quotienten gleichgesetzt werden, in dessen Zähler die Differenz $v_L - v_{Ref}$ und in dessen Nenner die Differenz $T_{AV} - T_{Ref}$ steht, wobei $v_L$ eine Durchschnittsschallgeschwindigkeit, $V_{Ref}$ eine Referenzschallgeschwindigkeit, $T_{AV}$ die Durchschnittstemperatur und $T_{Ref}$ eine Referenztemperatur bedeuten. Der apparative und elektronische Aufwand im Verhältnis zur Genauigkeit ist bei dieser bekannten Füllstandsmeßeinrichtung verhältnismäßig groß. Außerdem müssen eine Vielzahl von Kontrollmessungen ausgeführt werden, weil durch die relativ hohe Anzahl von Bezugsreflektoren, die über die Füllstandshöhe verteilt angeordnet sind, Streustrahlungen auftreten, die bei den Messungen eliminiert werden müssen.

Ferner ist aus der EP-A1-0 138 541 eine Flüssigkeitsstandmeßeinrichtung bekannt, bei der der Flüssigkeitsstand durch eine Ultraschallaufzeitmessung eines ersten Schallimpulses durch die zu vermessende Flüssigkeit und ein Heranmulitplizieren eines Referenzfaktors bestimmt wird. Der Referenzfaktor wird dabei aus Ultraschallaufzeiten mindestens eines Schallimpulses durch eine mit der zu vermessenden Flüssigkeit gefüllte Referenzstrecke bekannter Länge bestimmt. Der auf der Referenzstrecke gewonnene Referenzfaktor wird aber als linearer Steigungsfaktor über die gesamte Füllstandshöhe bewertet, wodurch Dichte und und Temperaturschwankungen bei der Bestimmung der wahren Füllstandshöhe nicht berücksichtigt werden können und sich aufgrunddessen größere Ungenauigkeiten ergeben können.

Der Erfindung liegt die Aufgabe zugrunde, eine Füllstandsmeßeinrichtung anzugeben, welche ohne Bezugs-Reflektoren auskommt und damit Streustrahlung vermeidet und mit welcher trotzdem eine hohe Genauigkeit bei zuverlässiger Arbeitsweise erreicht werden kann. So soll eine Genauigkeit der Füllstandsanzeige von höchstens ± 1 mm Meßtoleranz, vorzugsweise aber noch darunter, erreicht werden. Dabei soll sich der Aufwand an Meßaufnehmern und der daran gekoppelte Aufwand für elektronische Meßwertverarbeitung in Grenzen halten.

Diese Aufgabe wird erfindungsgemäß gelöst durch eine Füllstandsmeßeinrichtung für mit einer Flüssigkeit gefüllte Behälter mit Bestimmung der Füllstandshöhe h aus der Schallaufzeit von Ultraschallimpulsen, bei der

a) eine Hauptmeßstrecke vom Bodenbereich des Behälters bis zur Flüssigkeitsoberfläche reicht,

b) ein erster Schallimpulssender vorhanden ist, der die Hauptmeßstrecke abstrahlt und ein erster Schallimpulsempfänger vorhanden ist, der die von der Flüssigkeitsoberfläche reflektierten Schallimpulse nach einer dem Flüssigkeitsfüllstand entsprechenden Laufzeit $t_H$ aufnimmt,

c) über die Füllstandshöhe h verteilte Mittel zur Erfassung der Temperatur vorgesehen sind, die einer Temperaturmeßweit-Auswerteeinheit zugeordnet sind, deren Ausgangsgröße eine mittlere Temperatur $T_M$ im Flüssigkeitsvolumen ist,

d) eine im Flüssigkeitsvolumen befindliche Referenzstrecke mit bekannter Länge zusätzlich zur Hauptmeßstrecke vorgesehen ist,

2

e) ein zweiter Schallimpulssender vorhanden ist, der die Referenzstrecke abstrahlt und ein zweiter Schallimpulsempfänger vorhanden ist, der die von der Referenzstrecke reflektierten Schallimpulse nach einer Laufzeit $\Delta t^*$ aufnimmt,

f) an der Referenzstrecke wenigstens ein Temperatursensor vorgesehen ist, der der Temperatur-Meßwert-Auswerteeinheit zugeordnet ist und zur Erfassung der Temperatur dient, wobei die Ausgangsgröße eine Referenztemperautr $T_{Ref}$ in einem mit dem übrigen Flüssigkeitsvolumen in Temperaturaustausch stehendem Flüssigkeitsteilvolumen entlang der Referenzstrecke ist, und

g) eine Mirkoprozessor-Einheit vorgesehen ist, die aus $\Delta t^*$ eine Schallgeschwindigkeit $v^*(T_{Ref})$, eine temperaturkorrigierte Schallgeschwindigkeit $v(t)$ im Flüssigkeitsvolumen und damit eine temperatur-korrigierte Füllstandshöhe $h(T)$ gemäß folgender Formeln bestimmt: $v(T) = v^*(T_{Ref}) \cdot (1 + K_K \cdot \Delta T)$ und $h(T) = v(T) \cdot t_H$, worin $\Delta T = T_M - T_{Ref}$; $K_K = v(T_1) - v(T_0) / (v(T_0) \cdot \Delta T^*)$; $\Delta T^* = T_1 - T_0$,

wobei $T_0$, $T_1$ zwei unterschiedliche an der Referenzstrecke gemessene Temperaturen und $v(T_0)$, $v(T_1)$ die zugehörigen mit der Referenzstrecke gemessenen Schallgeschwindigkeiten sind sowie $K_K$ ein Korrekturfaktor ist, der aufgrund der Messungen von $T_0$, $T_1$, $v(T_0)$, $v(T_1)$ die normierte Änderung der Schallgeschwindigkeit pro Grad Temperaturänderung des Flüssigkeitsvolumens angibt.

Vorteilhafte Weiterbildungen dieser Füllstandsmeßeinrichtung sind in den Patentansprüchen 2 bis 15 angegeben.

Die mit der Erfindung erzielbaren Vorteile sind vor allem darin zu sehen, daß im Weg der Hauptmeßstrecke keine Bezugs-Reflektoren angeordnet sind; infolgedessen gelangt das zur Flüssigkeitsoberfläche gesandte und von dieser zurückgesandte Ultraschallsignal praktisch unbehindert zum Schallimpulsempfänger. Die Mittel zur Temperaturverteilung über die Füllstandshöhe brauchen nicht im Strahlenkegel der Hauptmeßstrecke zu liegen, sie können vielmehr seitlich davon angeordnet werden.

Die Mittel zur Erfassung der Temperaturverteilung umfassen gemäß Anspruch 2 bevorzugt Temperatursensoren, welche an mehreren über die Füllstandshöhe verteilten Meßstellen angeordnet sind und aus deren Temperatur-Meßwerten durch Mittelwertbildung die mittlere Temperatur TM des Flüssigkeitsvolumens ableitbar ist. Sehr gute Meßergebnisse konnten bereits mit einer Füllstandsmeßeinrichtung gemäß Anspruch 3 erreicht werden, bei welcher die Mittel zur Erfassung der Temperaturverteilung mindestens einen Temperatursensor, angeordnet in Bodennähe, bei etwa einem Drittel sowie bei etwa zwei Dritteln der maximalen Füllstandshöhe des Behälters umfassen.

Die Temperatursensoren werden bevorzugt am Außenumfang eines Schallführungsrohres befestigt, welches im einzelnen in den Ansprüchen 4 bis 11 beschrieben ist. Für die Hauptmeßstrecke ist gemäß Anspruch 4 ein vertikal ausgerichtetes Schallführungsrohr vorgesehen, welche vom Bodenbereich des Behälters bis zu einer Höhe reicht, die sich oberhalb des höchsten Füllstandes befindet. Das Innere dieses ersten Schallführungsrohres kommuniziert über Öffnungen mit dem übrigen Flüssigkeitsvolumen. An seinem unteren Ende ist ein Schallimpulssender zum Aussenden eines Ultraschallstrahles in Richtung auf die Oberfläche des Flüssigkeitsvolumens und ein erster Schallimpulsempfänger zum Empfang des an der Oberfläche reflektierten Ultraschallstrahls angeordnet. An diesem ersten Schallführungsrohr sind, wie erwähnt, bevorzugt die Temperatursensoren außen befestigt. Der Referenzstrecke ist gemäß Anspruch 6 ein eigenes zweites Schallführungsrohr zugeordnet, an welchem die Schallimpulssender und -empfänger sowie der wenigstens eine Referenztemperatursensor befestigt sind und dessen Inneres über wenigstens eine Öffnung mit dem übrigen Flüssigkeitsvolumen kommuniziert. Es ist günstig, wenn das zweite Schallführungsrohr für die Referenzstrecke als ein nahe dem Boden des Behälters angeordnetes Querrohr ausgebildet ist (Anspruch 7). Eine kompakte, montagefreundliche Meßanordnung erhält man durch ein kombiniertes Schallführungsrohr gemäß Anspruch 8, wonach das erste Schallführungsrohr für die Hauptmeßstrecke an seinem unteren Ende mit dem Querrohr für die Referenzstrecke zu einem T-förmigen, durchgehend hohlen Meßrohr baulich vereinigt ist.

Weitere vorteilhafte Ausbildungen des kombinierten Schallführungsrohres, insbesondere betreffend die Anordnung der ersten Schallimpulssender und -empfänger sowie weiterer dritter Schallimpulssender und -empfänger zur Ermittlung des Sumpfpegels, sind in den Ansprüchen 9 bis 11 angegeben.

Eine vorteilhafte Befestigung des ersten bzw. des kombinierten Schallführungsrohres an einem durch den Behälter-Domdeckel hindurchgeführten Einfüllrohr und die Verlegung der Meß- und Stromversorgungsleitungen sowie deren Durchführung durch den Domdeckel betrifft Anspruch 12.

Als Schallimpulssender und -empfänger für die Füllstandsmeßeinrichtung dienen bevorzugt Piezokeramik-Sensoren, wobei zweckmäßigerweise deren Schallaufzeiten jeweils vom Moment des Sensor-Kurzschlusses bis zum Auftreffen der ersten Amplitude eines Echos gemessen sind (Anspruch 13). Eine gute Meßgenauigkeit mit Meßwerttoleranzen unterhalb von 1 mm erhält man, wenn zur Erfassung der Schallaufzeiten von einem Laufzeitzähler-Schwinger in festem Rhythmus vorgegebene Zähltakte dienen und die Frequenz der gesendeten Ultraschallimpulse zur Frequenz des Laufzeitzähler-Schwingers im Verhältnis 1:3 bis 1:6 steht (Anspruch 14). Gemäß Anspruch 15 ist es besonders günstig, wenn die Frequenz der gesendeten Ultraschallimpulse 2 MHz und die Frequenz des Laufzeitzähler-Schwingers 8 MHz beträgt.

Gegenstand der Erfindung ist auch ein Verfahren zur Bestimmung des Füllstandes in mit Flüssigkeit gefüllten Behältern, vorzugsweise in Tanks von Tankanlagen, mit Bestimmung der Füllstandshöhe aus der Schallaufzeit von Ultraschallimpulsen, die entlang einer vom Bodenbereich des Behälters bis zur Flüssigkeitsoberfläche reichenden Hauptmeßstrecke von ersten Schallimpulssendern abgestrahlt und von der Flüssigkeitsoberfläche zu ersten Schallimpulsempfängern reflektiert werden.

Dieses gattungsgemäße Verfahren, welches durch die eingangs zitierte EP-A3-0 106 677 gleichfalls bekannt ist, soll analog zur Füllstandsmeßeinrichtung nach der Erfindung so gestaltet werden, daß es nicht erforderlich ist, mit einer Vielzahl von Referenzmeßstrahlen zu arbeiten, die von einem Schallimpulssender ausgesandt und nach ihrer Reflektion an den Bezugs- Reflektoren von einem Schallimpulsempfänger empfangen und zur weiteren Auswertung weitergeleitet werden. Das Verfahren nach der Erfindung soll vielmehr ohne die Verwendung von Bezugs-Reflektoren eine mindestens gleichwertig genaue, wenn nicht sogar genauere Ermittlung der Füllstandshöhe, bezogen auf den elektrischen, mechanischen und elektronischen Aufwand, gestatten.

Bezüglich des Verfahrens wird die genannte Aufgabe gelöst durch ein Verfahren zur Bestimmung des Füllstandes in einem mit einer Flüssigkeit gefüllten Behälter, bei dem

a) mit einem ersten Ultraschallimpulssender und -empfänger eine dem Füllstand der Flüssigkeit (10) im Behälter entsprechende Ultraschallaufzeit $t_H$ gemessen wird,

b) mittels über die Füllstandshöhe verteilten Temperatursensoren eine mittlere Temperatur $T_M$ des Flüssigkeitsvolumens abgeleitet wird,

c) mit einem zweiten Ultraschallimpulssender und -empfänger eine der bekannten Länge einer Referenzstrecke entsprechende Ultraschallaufzeit $\Delta t^*$ gemessen wird,

d) an der Referenzstrecke mittels wenigstens einem Temperatursensor eine Referenztemperatur $T_{Ref}$ des Flüssigkeitsvolumens der Referenzstrecke abgeleitet wird, woraus mit $\Delta t^*$ eine Referenzschallgeschwindigkeit $v^*(T_{Ref})$ abgeleitet wird,

e) an der Referenzstrecke zwei unterschiedliche Temperaturen $T_0$, $T_1$ gemessen werden, aus denen die zugehörigen mit der Referenzstrecke ermittelten Schallgeschwindigkeiten $v(T_0)$, $v(T_1)$ abgeleitet werden und ein Korrekturfaktor $K_K$, der die normierte Änderung der Schallgeschwindigkeit pro Grad Temperaturänderung des Flüssigkeitsvolumens angibt, gemäß $K_K = v(T_1) - v(T_0) / (v(T_0) \cdot \Delta T^*)$ mit $\Delta T^* = T_1 - T_0$ bestimmt wird, und

f) eine temperatur-korrigierte Schallgeschwindigkeit $v(T)$ im Flüssigkeitsvolumen und damit abschließend eine temperaturkorrigierte Füllstandshöhe $h(T)$ gemäß folgender Formeln bestimmt wird:

$v(T) = v^*(T_{Ref}) \cdot (1 + K_K \cdot \Delta T)$ und $h(T) = v(T) \cdot t_H$, worin $\Delta T = T_M - T_{Ref}$ ist.

Vorteilhafte Weiterbildungen dieses Verfahrens sind in den Patentansprüchen 17 bis 21 angegeben.

Die mit diesem Verfahren erzielbaren Vorteile sind vor allem darin zu sehen, daß für jede Füllstandsmessung ein aktueller Korrekturfaktor bestimmt wird, und dies auch dann, wenn zwischen der Schallgeschwindigkeitsänderung als Funktion von der Temperaturänderung des Flüssigkeitsvolumens kein linearer Zusammenhang besteht. Dieser Vorteil gilt im übrigen auch für die Füllstandsmeßeinrichtung nach der Erfindung. Die mittlere Temperatur TM kann durch Messung der Temperatur an mehreren über die Füllstandshöhe verteilten Meßstellen sehr genau bestimmt werden, wie es im einzelnen noch erläutert wird.

Für die praktische Anwendung des Verfahrens ist es besonders vorteilhaft, wenn gemäß Anspruch 16 bei der Ermittlung der Füllstandshöhe $h(T)$ auch die Sumpfhöhe b im Behälter berücksichtigt wird und die die Sumpfhöhe berücksichtigende Füllstandshöhe $h^*(T)$ nach folgender Gleichung ermittelt wird:

$$h^*(T) = t_H \cdot v(T) + t_S \cdot v(T) - a + b,$$

worin bedeuten:

$t_S$     den der Sumpfhöhe entsprechenden Teil der Laufzeitdifferenz $\Delta t_S$, die mit einem dritten Schallimpulssender und -empfänger (S3), der im bodennahen Bereich des Flüssigkeitsvolumens angeordnet ist, gemessen wird,

a     den in Höhenrichtung gemessenen Abstand zwischen den ersten und dritten Schallimpulssendern und -empfängern (S1-S3), und

b     die von den dritten Schallimpulssendern und -empfängern (S3) gemessene Sumpfhöhe.

Es ist günstig, die von den Schallimpulsempfängern aufgenommenen Schallimpulse in Abhängigkeit von der Schallaufzeit zu verstärken, um sowohl bei kurzen wie auch bei längeren Laufzeiten der ersten Amplitude relativ konstant zu halten.

Im Zusammenhang mit der innerhalb eines Schallführungsrohres verlaufenden Hauptmeßstrecke ist es besonders vorteilhaft, daß Rückwirkungen von Oberflächenbewegungen der Flüssigkeit auf den Füllstand durch das Schallführungsrohr selbst und durch Mehrfachmessungen minimiert werden. Da das erste und das zweite Schallführungsrohr bzw. das aus der Kombination beider gebildete Meßrohr über Öffnungen mit dem Flüssigkeitsvolumen kommunizieren, wird einerseits für einen Temperaturausgleich innerhalb der Hauptmeßstrecke und der Referenzstrecke zum übrigen Flüssigkeitsvolumen gesorgt, andererseits werden dadurch sogenannte Schallverwehungen vermieden, weil Hauptmeß- und Referenzstrecke von Flüssigkeitsbewegungen des übrigen Flüssigkeitsvolumens weitgehend entkoppelt sind. Die Impulsdauer der Schallimpulse wird bei geringen Füllhöhen zweckmäßigerweise kleiner gewählt als bei Füllhöhen nahe einer maximal zulässigen Füllhöhe. Dies geschieht durch Reduzierung der Sendespannung für die Piezokeramik der Ultraschallprüfköpfe bzw. Schallimpulssender und -empfänger. Bei niedrigeren Ladespannungen der Piezokeramik ist die Ausschwingzeit und damit die nicht zur Echodetektion verfügbare Zeit wesentlich kürzer.

Gemäß einer anderen Weiterbildung des Verfahrens wird aus der Füllhöhe, entweder h(T) oder h*(T), durch Multiplikation mit einem hierzu aus einer Tankkennlinie entnommenen Faktor das Flüssigkeitsvolumen und hieraus durch Multiplikation mit der aus der Temperaturverteilung abgeleiteten Dichte die Flüssigkeitsmenge des Behälters bzw. Tanks bestimmt.

Eine besonders vorteilhafte Ausgestaltung der Erfindung ergibt sich durch die Verwendung eines Schallführungsrohres, wie es in den Ansprüchen 8 und 9 als ein T-förmiges, aus Längs- und Querrohr bestehendes kombiniertes Meßrohr beschrieben ist, zur Unterbringung und Halterung eines oder mehrerer Schallimpulssender und -empfänger sowie der Bezugs-Reflektoren oder -Blenden einer Füllstandsmeßeinrichtung, bei welcher die Bezugs-Reflektoren oder -Blenden über die Füllstandshöhe mit definiertem Abstand untereinander und zu den Schallimpulssendern und -empfängern angeordnet sind und die an den Bezugs-Reflektoren oder -Blenden reflektierten Ultraschallimpulse Laufzeitdifferenzen ergeben, die zusammen mit den zugehörigen bekannten Schallweglängen zur Ermittlung einer durchschnittlichen, die Dichte im Flüssigkeitsvolumen berücksichtigenden Schallgeschwindigkeit im Flüssigkeitsvolumen dienen, wobei aus der durchschnittlichen Schallgeschwindigkeit und der auf die Flüssigkeitsoberfläche bezogenen Laufzeitdifferenzen der Ultraschall-Meßstrahlen die Füllstandshöhe ermittelt wird.

Zur weiteren Erläuterung der Füllstandsmeßeinrichtung sowie des zugehörigen Verfahrens zur Bestimmung des Füllstandes nach der Erfindung werden im folgenden mehrere Ausführungsbeispiele anhand der Zeichnung erläutert. In der Zeichnung zeigen in teils vereinfachter, schematischer Darstellung:

FIG 1     den Tank einer Tankanlage im Ausschnitt und zum Teil im Schnitt, welcher mit einer Füllstandsmeßeinrichtung nach der Erfindung versehen ist,

FIG 2     im Aufriß die Tankanlage einer Tankstelle, wobei ein etwas abweichend gestalteter Tank ersichtlich ist, der eine Füllstandsmeßeinrichtung nach FIG 1 aufweist;

FIG 3     ein Diagramm zur Ermittlung der mittleren Temperatur TM mit drei über die Füllstandshöhe verteilten Temperatursensoren,

FIG 4     ein FIG 3 entsprechendes Diagramm, bei dem zur Ermittlung der mittleren Temperatur TM nur zwei Temperatursensoren zugrundegelegt sind, weil der Füllstand abgesunken ist,

FIG 5     ein entsprechendes Diagramm, bei dem zur Ermittlung von TM nur der unterste Temperatursensor wegen tiefen Füllstandes herangezogen ist,

FIG 6     ein Blockschaltbild der Meßwertgeber und angeschlossenen Auswerteelektronik für eine Füllstandsmeßeinrichtung nach der Erfindung und

FIG 7     eine abgewandelte Füllstandsmeßeinrichtung zur Darstellung der vorteilhaften Verwendung eines aus Längs- und Querrohr kombinierten T-förmigen Meßrohres bei Füllstandsmeßeinrichtungen, die mit Bezugs-Reflektoren oder -Blenden arbeiten.

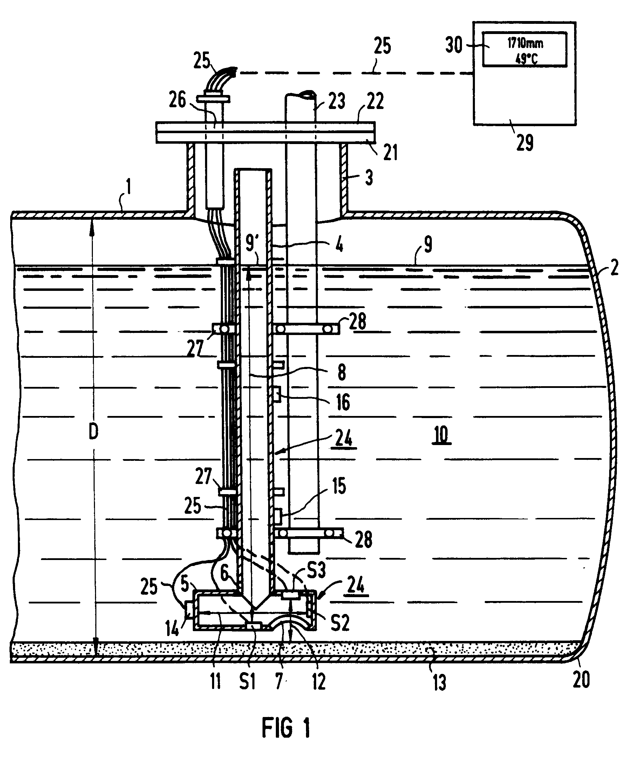

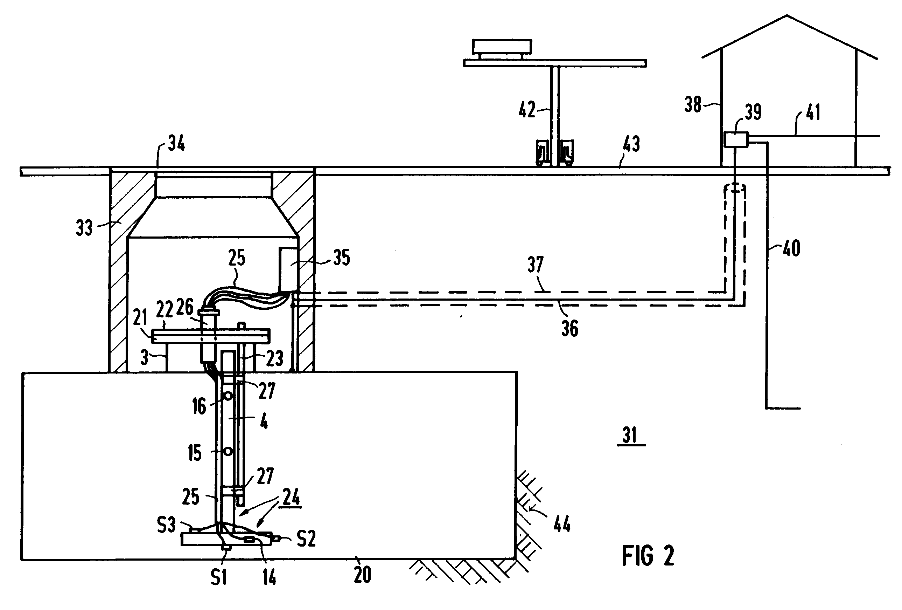

FIG 1 zeigt einen Tank 20 mit einem zylindrischen Mittelteil 1 und leicht gewölbten kalottenartigen Endwänden 2, wobei nur das den Dom 3 aufweisende Ende dargestellt ist. Der Tank 20 ist, wie es aus FIG 2 näher hervorgeht, im Erdreich vergraben, so daß seine Oberseite beispielsweise einen Meter unterhalb der Erdoberfläche liegt. Der Tank 20 dient beispielsweise zur Zwischenspeicherung von flüssigen Kraftstoffen auf Mineralölbasis in Tankstellen. Der Dom 3 bildet einen Einstiegsstutzen und weist einen Deckelflansch 21 mit Domdeckel 22 auf. Durch den Domdeckel 22 ist ein in das Behälterinnere ragendes Einfüllrohr 23 für die Flüssigkeit 10 dichtend hindurchgeführt und gehalten. Das Rohr 23 kann auch als Entnahmerohr dienen. Durch den Dom 3 ist weiterhin ein sich nahezu über die gesamte Tankhöhe erstreckendes erstes Schallführungsrohr 4 in den Tank 20 eingeführt. Dieses trägt an seinem unteren Ende ein etwa parallel zum Tankboden angeordnetes Querrohr 5, welches ein zweites Schallführungsrohr für eine Referenzmeßstrecke 11 bildet. Bei einem Tankdurchmesser D von etwa 3 m haben sowohl das erste Schallführungsrohr 4 als auch das zweite Schallführungsrohr 5 (Querrohr) eine lichte Weite von etwa 50 mm. Das erste Schallführungsrohr 4 weist in seinem unteren Bereich Öffnungen 6 auf, durch die der Innenraum der Rohre 4 und 5 mit der Flüssigkeit 10 im Tank 20 in Verbindung steht, so daß sich im ersten Schallführungsrohr 4 nach dem Prinzip der kommunizierenden Röhren der gleiche Pegel 9' wie der Pegel bzw. die Oberfläche 9 des übrigen Volumens der Flüssigkeit 10 einstellt. Das zweite Schallführungsrohr 5 wird im folgenden vereinfachend als Querrohr bezeichnet. Es ist in der Nähe seines einen Endes auf der dem Tankboden zugekehrten Seite mit einem Schalloch 7 versehen.

Die T-förmige Einheit eines Meßrohres 24, bestehend aus dem vertikalen (ersten) Schallführungsrohr 4 und dem horizontalen Querrohr 5, trägt drei Schallimpulssender und -empfänger S1, S2,S3.

Der erste Schallimpulssender und -empfänger S1 ist im Querrohr 5 gegenüber der Einmündung des ersten Schallführungsrohres 4 befestigt. Er sendet und empfängt in Richtung eines Doppelpfeiles 8 entsprechend einer Hauptmeßstrecke Schallimpulse, die von der Oberfläche 9 der Flüssigkeit 10 reflektiert werden. Durch die Öffnung 6 im ersten Schallführungsrohr 4 ist gewährleistet, daß die Oberfläche 9' der Flüssigkeit 10 innerhalb des Schallführungsrohres 4 mit der Oberfläche 9 der Flüssigkeit außerhalb des Schallführungsrohres 4 genau übereinstimmt, wie bereits angedeutet. Darüber hinaus ist durch die beträchtliche Größe des Querschnitts des Schallführungsrohres 4 gewährleistet, daß infolge der Oberflächenspannung der Flüssigkeit 10 eine von der horizontalen abweichende Oberflächenform vernachlässigbar gering ist.

Der zweite Schallimpulssender und -empfänger S2 wird von einer Stirnwand des Querrohres 5 getragen. Er sendet und empfängt in Richtung eines Doppelpfeiles 11 Schallimpulse, die von der ihm gegenüberliegenden Stirnwand des Querrohres 5 reflektiert werden. Da die Länge des Querrohres 5 als Referenzstrecke genau bekannt ist, läßt sich aus der Laufzeit der vom Schallimpulssender und -empfänger 52 gesendeten und empfangenen Schallimpulse die Schallgeschwindigkeit innerhalb der Referenzstrecke 11 und mit gewissen Einschränkungen die Art der Flüssigkeit 10 ableiten.

Der dritte Schallimpulssender und -empfänger 53 sitzt gegenüber dem Schalloch 7 im Querrohr 5. Er sendet und empfängt in Richtung eines vertikalen Doppelpfeiles 12. Als jeweils erstes Echo erhält er von jedem gesendeten Impuls das Echo eines Pegels 13, der die Grenzschicht ist zwischen der Flüssigkeit 10 und Verunreinigungen, wie beispielsweise Wasser und Schmutz, die sich infolge größerer Dichte am Boden des Tanks 20 abgesetzt haben.

Bei der Füllstandsmeßeinrichtung nach FIG 1 sind außerdem Temperatursensoren 14,15,16 vorgesehen, über welche die Flüssigkeitstemperatur in Höhe des Querrohres 5, in Höhe von einem Drittel und in Höhe von zwei Dritteln der maximal zulässigen Füllhöhe des Tanks 20 erfaßt wird. Der Temperatursensor 14 ist der Referenztemperatur-Sensor für die Referenzstrecke, symbolisiert durch den Doppelpfeil 11. Mit ihm kann eine Referenztemperatur $T_{Ref}$ des Flüssigkeitsteilvolumens der Referenzstrecke 11 gemessen werden. Mittels des zweiten Schallimpulssenders und -empfängers S2 wird weiterhin jeweils die Schallgeschwindigkeit $v^*(T_{Ref})$ für das Flüssigkeitsvolumen bei der Referenztemperatur ($T_{Ref}$) aufgrund einer jeweils gemessenen Laufzeitdifferenz $\Delta t^*$ ermittelt. Bei bekannter Länge der Referenzstrecke 11 und bei der gemessenen Referenztemperatur $T_{Ref}$ ergibt sich damit die Schallgeschwindigkeit $v^*(T_{Ref})$. Die Referenzstrecke 11 dient weiterhin zur Ermittlung eines Korrekturfaktors $K_k$, welcher zur Berechnung einer durchschnittlichen oder temperatur-korrigierten Schallgeschwindigkeit aus der Referenzschallgeschwindigkeit $v^*$ dient. Dieser Korrekturfaktor ist wie folgt definiert:

$$K_k = \frac{1}{\Delta T^*} \cdot \frac{v(T_1) - v(T_0)}{v(T_0)}$$

Dabei ist $\Delta T^*$ definiert durch die Differenz $T_1 - T_0$, wobei $T_1$, $T_0$ zwei unterschiedliche an der Referenzstrecke 11 mit dem Referenztemperatur-Sensor 14 gemessene Temperaturen der Flüssigkeit 10 und $v(T_1)$, $v(T_0)$ die zugehörigen, mit der Referenzstrecke gemessenen Schallgeschwindigkeiten sind. Der Korrekturfaktor oder allgemeiner die Korrekturfunktion $K_k$ gibt aufgrund der Messungen von $T_1,T_0,v(T_1),v(T_0)$ die normierte Änderung der Schallgeschwindigkeit pro Grad Temperaturänderung des Flüssigkeitsvolumens 10 an.

Die temperatur-korrigierte Füllstandshöhe wird nach der Gleichung $h(T) = v(T) \cdot t_H$ ermittelt, worin $t_H$ der der Füllstandshöhe entsprechende Teil der Laufzeitdifferenz $\Delta t_1$ ist, die mit dem ersten Schallimpulssender und -empfänger S1 jeweils gemessen wird. Wenn der Meßstrahl nur einmal hin und her geht, wie dargestellt, dann ist $t_H = \Delta t_1/2$.

Zur Ermittlung der für das gesamte Flüssigkeitsvolumen temperatur-korrigierten Schallgeschwindigkeit $v(T)$ dient die folgende Grundgleichung:

$$v(T) = v^*(T_{Ref}) \cdot [1 + K_k \cdot \Delta T].$$

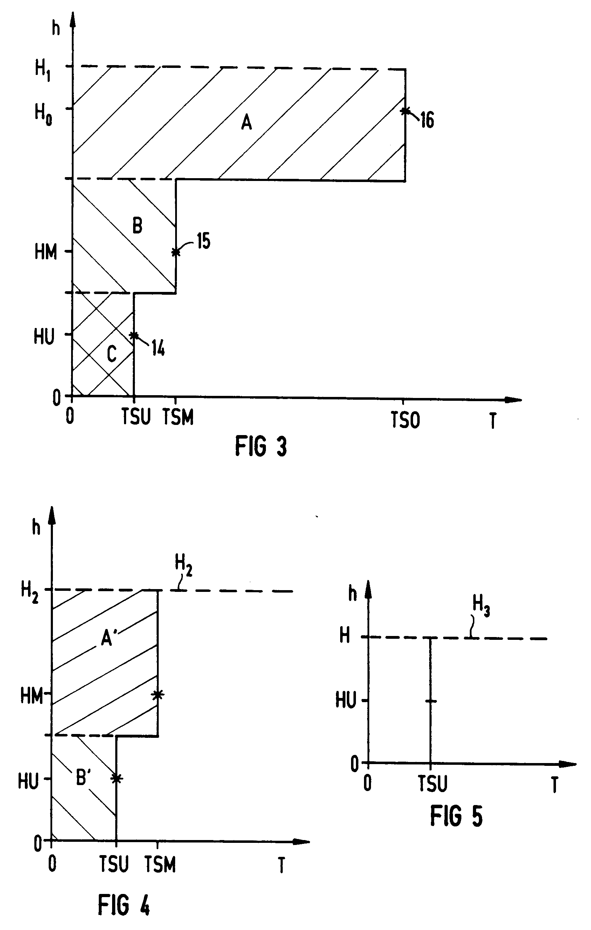

In dieser Gleichung sind alle Größen bekannt bis auf $\Delta T = TM - T_{Ref}$, wobei TM die mittlere Temperatur TM im Flüssigkeitsvolumen ist, zu deren Bestimmung Mittel zur Erfassung der Temperaturverteilung über die Füllstandshöhe h in Form der bereits erwähnten Temperatursensoren 14,15 und 16 vorgesehen sind. Mit diesen Temperatursensoren, von denen der Referenztemperatursensor 14 sowohl zur Ermittlung der Referenztemperatur $T_{Ref}$ als auch - zusammen mit den anderen beiden Temperatursensoren zur Messung der Temperaturverteilung über die Füllstandshöhe herangezogen wird, läßt sich die mittlere Temperatur TM des Flüssigkeitsvolumens relativ genau ermitteln, wie im folgenden anhand der Figuren 3 bis 5 erläutert wird.

In FIG 3 ist die Füllhöhe h (Ordinate) über der Temperatur-Achse T (Abszisse) aufgetragen. HU ist die Höhe bzw. Höhenposition des unteren Temperatursensors 14, welcher die Temperatur TSU mißt. HM ist die Höhe des mittleren Temperatursensors 15, der die Temperatur TSM messen möge, wobei TSM größer ist als TSU.

HO ist die Höhe des oberen Temperatur sensors 16, der die Temperatur TSO messen möge, wobei TSO größer ist als TSM.

Den Figuren 3 bis 5 liegt nun ein Stufenmittelungsverfahren zugrunde. Es sind aufgrund der Anordnung von drei Temperatursensoren, über die Füllhöhe verteilt, drei mögliche Fälle für die Flüssigkeitshöhe (Benzinhöhe) im Tank 20 zu berücksichtigen, wobei bei den Höhenangaben HO,HM,HU eine Einbautoleranz für den jeweiligen Temperatursensor zugeschlagen worden ist, damit sichergestellt ist, daß ein nicht in die Flüssigkeit eingetauchter Sensor nicht zur Temperaturmittelung herangezogen wird. Die drei möglichen Fälle sind:

1. Die Füllhöhe $h = H_1$, also größer oder wesentlich größer als die Einbauhöhe HO des Temperatursensors 16, vergleiche FIG 3;

2. die Füllhöhe $h = H_2$, das heißt sie liegt zwischen HM (mittlere Höhe des Sensors 15) und HO (Einbauhöhe des oberen Temperatursensors), vergleiche FIG 4 in Verbindung mit FIG 3 ;

3. die Füllhöhe $h = H_3$, sie liegt also unterhalb der Einbauhöhe HM des mittleren Temperatursensors 15, so daß nur der untere Temperatursensor 14 zur Messung herangezogen wird (vergleiche FIG 5 in Verbindung mit FIG 3).

Für den Fall (1) ergibt sich die Formel "TM 1" :

$$TM = \frac{1}{H_1} \left[ \underbrace{(H_1 - \frac{HO+HM}{2}) \cdot TSO}_{\text{Fläche A}} + \underbrace{(\frac{HO-HU}{2}) \, TSM}_{B} + \underbrace{(\frac{HM+HU}{2}) \, TSU}_{C} \right],$$

für den Fall (2), die Formel "TM 2".

$$TM = \frac{1}{H_2} \left[ \underbrace{(H_2 - \frac{HM+HU}{2}) \cdot TSM}_{\text{Fläche A'}} + \underbrace{(\frac{HM+HU}{2}) \cdot TSU}_{B'} \right]$$

und für den einfachsten Fall (3) die Formel TM 3
$$TM = TSU,$$

Kurz gesagt werden beim Fall (1) die Flächen A (Schrägschraffur von links unten nach rechts oben), B (Schrägschraffur von links oben nach rechts unten) und C (Rasterschraffur) zusammengezählt und dann durch die gesamte Füllstandshöhe des betreffenden Falles, hier: $H_1$, dividiert, so daß sich daraus die mittlere Temperatur TM ergibt (Formel TM 1). Der Fall (2) ist etwas einfacher, weil nur die Flächen A' und B' addiert werden müssen, wobei dann die resultierende Fläche (A' + B') durch die betreffende Füllstandshöhe $H_2$ dividiert wird, um TM zu erhalten. Der Fall (3) ist der einfachste, weil bei dieser Füllstandshöhe $H_3$ die vom unteren Temperatursensor 14 gemessene Temperatur TSU dann zugleich die mittlere Temperatur TM darstellt.

Die vorstehend beschriebene Stufenmittelung ist relativ einfach und führt zu relativ genauen Ergebnissen. Die Genauigkeit kann im Bedarfsfalle durch Installation weiterer Temperatursensoren also z.B. eines zusätzlichen vierten und gegebenenfalls fünften Temperatursensors noch gesteigert werden. Außer einem Stufenmittelungsverfahren könnte man auch TM durch lineare Mittelung ermitteln. Bei diesem Verfahren würde in FIG 3 durch die Punkte 14 und 15 eine Gerade gezogen und vom Punkt 15 eine weitere Verbindungsgerade zum Punkt 16. Es würde dann wieder eine Flächenabschnittsberechnung für die Flächen durchgeführt werden, die zwischen diesen Geraden und der Ordinatenachse gebildet werden, und die resultierende Fläche würde durch die gesamte Füllstandshöhe geteilt. Dieses Verfahren ist allerdings formelmäßig nicht so einfach wie die erläuterte Stufenmittelung. Die Stufenmittelung ist auch einer sogenannten Kurvenmittelung überlegen, bei welcher die Punkte 14,15 und 16 durch eine Parabel miteinander verbunden werden.

Zurück zu FIG 1: Dort ist ersichtlich, daß die Temperatursensoren 15 und 16 außen am ersten Schallführungsrohr 4 befestigt sind. Der Schallweg für die Hauptmeßstrecke 8 wird damit nicht beeinflußt bzw. beeinträchtigt. Das Meßrohr 24 bzw. das erste Schallführungsrohr 4 sind am Einfüllrohr 23 achsparallel zu dessen Längsachse gehaltert. Die Meß- und Stromversorgungsleitungen 25 der Temperatursensoren 14,15,16 und der Schallimpulssender und -empfänger S1,S2,S3 sind außen am ersten Schallführungsrohr, wie ersichtlich, verlegt und durch eine gasdichte Leitungsdurchführung 26 im Domdeckel 22 nach außen geführt. Die Meß- und Stromversorgungsleitungen 25 sind im unteren Bereich des Meßrohres 24 lediglich schematisch bzw. gestrichelt dargestellt. Sie sind als Leitungsbündel mittels Kabelschellen 27 am ersten Schallführungsrohr 4 gehalten. Letzteres ist mittels justierbarer Doppelschellen 28 am Einfüllrohr 23 in vertikal ausgerichteter Position befestigt, wie dargestellt. In FIG 1 ist schematisch noch ein Auswertegerät 29 dargestellt, welches über in FIG 1 nicht dargestellte Meßverstärker an die Meß- und Stromversorgungsleitungen 25 angeschlossen ist und ein Anzeigefeld 30 (Display) aufweist, das einen Füllstand von beispielsweise 1.710 mm und eine durchschnittliche Temperatur TM von 49 °C angibt.

FIG 2 zeigt eine gesamte Tankanlage 31 mit Domschacht 32, welcher durch ein Mauerwerk 33 gebildet und durch eine Abdeckung 34 in Form einer Stahlplatte oder dergleichen betriebssicher nach außen abgedeckt ist. Uber den Domschacht 32 ist der Dom 3 des Tanks 20 zugänglich. Dieser ist im wesentlichen so ausgebildet wie der Tank 20 nach FIG 1 und weist auch eine entsprechende Füllstandsmeßeinrichtung auf. Am Innenumfang des Domschachtes 32 ist ein Schaltkasten 35 für eine Meßelektronik angeordnet, zu welchem die Meß- und Stromversorgungsleitungen 25 verlegt sind. Der Schaltkasten 35 enthält zweckmäßigerweise Meßverstärker und eine Blitzschutzeinheit. In diesem Zusammenhang muß erwähnt werden, daß die Kabeldurchführung 26 flammdurchschlagsicher ausgeführt ist. Vom Schaltkasten für die Meßelektronik ist durch die Erde in etwa 1 m Tiefe (also frostschutzsicher) ein Verbindungskabel 36 in einem Kabelkanal 37 verlegt, und zwar bis zu einer im Gebäude 38 angeordneten Steuereinheit 39. Von dieser Steuereinheit 39 gehen z.B. maximal acht Verbindungsleitungen 40 zu anderen (nicht dargestellten) Tanks ab, ferner eine Datenleitung 41 zu einem Computer, welcher der Meßdatenverarbeitung dient. Das Fundament der Tankanlage, auf welcher sich die Füllstation 42 und das Gebäude 38 befinden, ist mit 43 bezeichnet; durch dieses Fundament bzw. die Bodendecke ist das Verbindungskabel 36 zur Steuereinheit 39 im Gebäude 38 hindurchgeführt. Bei 44 ist schematisch das Erdreich angedeutet, in dem sich der Tank 20 befindet.

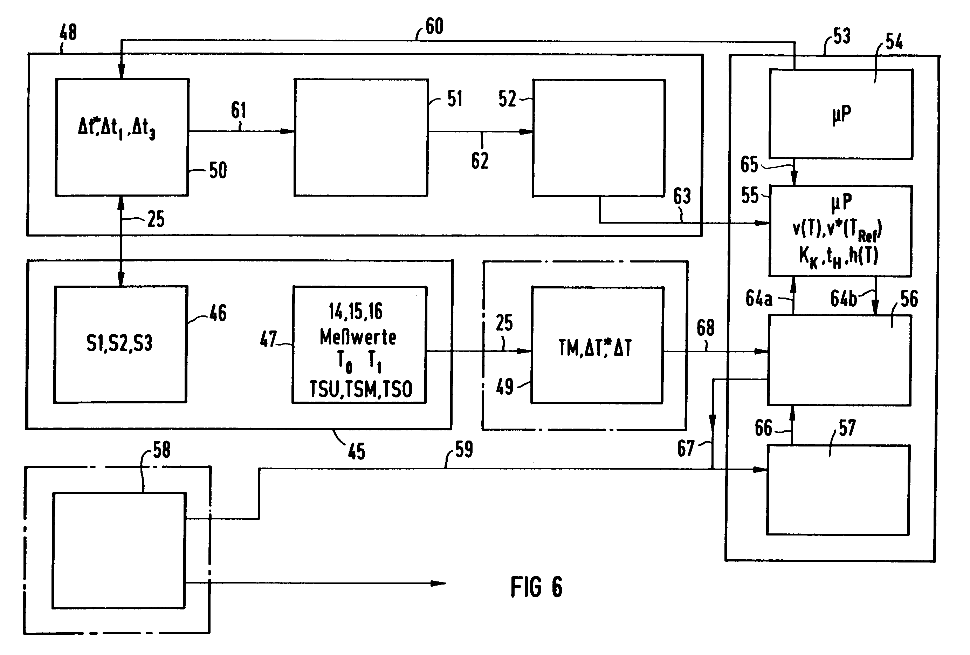

Das Blockschaltbild nach FIG 6 zeigt die elektronischen Bausteine einer Füllstandsmeßeinrichtung nach der Erfindung. Das Kästchen 45 umrahmt die beiden Baueinheiten 46 der sogenannten Niveausensoren, womit die Schallimpulssender und -empfänger S1, S2,S3 bezeichnet sind, und die Baueinheit 47 der Temperatursensoren 14,15,16. Die Baueinheiten 46,47 stehen über schematisch bei 25 angedeutete Signal- und Stromversorgungsleitungen in Verbindung mit einer Ultraschall-Steuer- und -Versorgungseinheit 48 zum einen und mit einer Temperatur-Meßsignal-Auswerteeinheit 49 zum anderen. Die Einheit 48 umfaßt die Untereinheiten 50 "Sensor-Ansteuerung und Echosignalempfang", 51 "Sensor-Signal-Verstärker" und 52 "Sensor-Signal-Digitalisierung". Weiterhin ist eine Rechner- und Spannungsregler-Baueinheit 53 vorgesehen, umfassend die Untereinheit 54 "Mikroprozessorsteuerung", 55 "Mikroprozessor-Auswertung", 56 "Meßdaten-Ausgabe" und 57 "Spannungsregler". Mit 58 ist ein Netzteil bezeichnet, welcher über ein mehradriges Stromversorgungs- und Signal-Kabel 59 mit dem Spannungsregler 57 elektrisch verbunden ist. Weitere Meß- und Steuerleitungen führen von der Mikroprozessor-Steuerung 54 als Leitung 60 zur Baueinheit 50, von letzterer eine Leitung 61 zur Baueinheit 51, von letzterer eine Leitung 62 zur Baueinheit 52 und von letzterer wiederum eine Leitung 63 zum Baustein 55 "Mikroprozessor-Auswertung". Die letztgenannte Einheit 55 steht über die Leitungen 64a,64b in Dialogverbindung mit der Meßdaten-Ausgabe 56, die Mikroprozessor-Steuerung 54 über eine Datenleitung 65 mit der Mikroprozessor-Auswertung 55. Vom Spannungsregler 57 führt eine Versorgungsleitung 66 zur Einheit 56 "Meßdaten-Ausgabe", und von letzterer ist eine elektrische Signalleitung 67 zum Eingang des Spannungsreglers 57 bzw. zur Verbindungsleitung 59 zurückgeführt. Uber die Signalleitung 68 gelangen die verarbeiteten Temperatur-Meßsignale TM,$\Delta$T*, $\Delta$T zur Einheit 56 "Meßdaten-Ausgabe". Mit der Baueinheit 47 lassen sich die Meßwerte $T_0$,$T_1$,TSU,TSM,TSO ermitteln, die zur Berechnung der mittleren Temperatur TM benötigt werden.

Als Schallimpulssender und Schallimpulsempfänger S1,S2,S3 werden bevorzugt Piezokeramiksensoren verwendet, wobei die Schallaufzeiten jeweils vom Moment des Sensorkurzschlusses bis zum Auftreffen der ersten Amplitude eines Echos gemessen werden. Als Grundbaustein solcher Sensoren dient eine piezokeramische Scheibe, die in ein Gehäuse aus vorzugweise Edelstahl oder Kunststoff so eingeklebt ist, daß die Gehäusedicke der dem Füllmedium zugewandten Seite des Sensors der Wellenlänge des Ultraschalls angepaßt ist (vielfache von Lambda-Viertel, vorzugsweise Lambda-Halbe). In der Baueinheit 50 sind Laufzeitzähler-Schwinger enthalten, welche zur Erfassung der Schallaufzeiten in festem Rhythmus vorgegebene Zähltakte erzeugen, wobei die Frequenz der von den Schallimpulssendern S1 bis S3 gesendeten Ultraschallimpulse zur Frequenz des Laufzeitzählerschwingers vorzugsweise im Verhältnis 1:3 bis 1:6 steht. Zur Erreichung einer hohen Grundmeßgenauigkeit ist die Resonanz- und Arbeitsfrequenz auf 2 MHz eingestellt, daß entspricht im Wasser einer Wellenlänge von 0,75 mm. Dabei hat der Laufzeitzähler-Schwinger vorzugsweise eine Arbeitsfrequenz von 8 MHz.

Bei den Temperatursensoren 14 bis 16 ist eine Differenzmeßgenauigkeit von etwa 1/10° vorgesehen, damit auch relativ geringe Temperaturgradienten innerhalb des Tankes 20 erfaßt werden können.

Durch die vorstehende anhand der Figuren 1 bis 6 erläuterte Füllstandsmeßeinrichtung wird ein Verfahren zur Bestimmung des Füllstandes in mit Flüssigkeit gefüllten Behältern, vorzugsweise in Tanks von Tankanlagen, verwirklicht. Dabei wird die Füllstandshöhe aus der Schallaufzeit von Ultraschallimpulsen, die entlang einer vom Bodenbereich des Behälters 20 bis zur Flüssigkeitsoberfläche 9 reichenden Hauptmeßstrecke 8

8

von ersten Schallimpulssendern S1 abgestrahlt und von der Flüssigkeitsoberfläche 9 zu ersten Schallimpulsempfängern (ebenfalls S1, weil Sende/Empfangs-Prüfköpfe verwendet werden) reflektiert werden.

Dabei wird eine temperatur-korrigierte Schallgeschwindigkeit v(T) - vergleiche hierzu den Baustein 55 von FIG 6 - im Flüssigkeitsvolumen gemäß folgender Gleichung ermittelt:

$$v(T) = v * (T_{Ref}) . [1 + K_k . \Delta T].$$

Daraus wird eine temperatur-korrigierte Füllstandshöhe h(T) = v(T) . $t_H$ ermittelt, wobei der Korrekturfaktor $K_k$, wie bereits beschrieben definiert ist. Zur Ermittlung des Korrekturfaktors $K_k$ dient, wie ebenfalls bereits erläutert, die Referenzstrecke 11, mit welcher die Werte $v(T_1),v(T_0),T_1,T_0$ und die Referenztemperatur $T_{Ref}$ gemessen werden. Aus der durch Mittelung ermittelten mittleren Temperatur TM kann dann $\Delta T = TM - T_{Ref}$ ermittelt werden, ebenso aus der Differenz $T_1 - T_0$ die Temperaturdifferenz $\Delta T^*$. Zur Ermittlung der abgeleiteten Größen dienen die Bausteine 49 und 55.

Bevorzugt wird bei der Ermittlung der Füllstandshöhe h(T) auch die Sumpfhöhe b im Behälter bzw. Tank 20 berücksichtigt. Die die Sumpfhöhe b berücksichtigende Füllstandshöhe h*(T) wird dabei nach folgender Gleichung ermittelt:

$$h * (T) = t_H . v(T) + t_S . v(T) - a + b.$$

Diese Gleichung und die in ihr enthaltenen Größen wurden bereits eingangs erläutert.

Bei der Durchführung des Verfahrens werden zweckmäßigerweise die von den Schallimpulsempfängern S1,S2,S3 aufgenommenen Schallimpulse in Abhängigkeit von der Schallaufzeit verstärkt. Diese Operation wird im Baustein 51 (FIG 6) durchgeführt. Die Ultraschall-Empfangssignale werden in der folgenden Stufe 52 dann digitalisiert, bevor sie dem Auswertebaustein 55 des Mikroprozessors zugeleitet werden. In dieser Auswerteeinheit 55 kann auch unter Zugrundelegung der ermittelten Füllstandshöhe h(T) oder vorzugsweise h*(T) durch Multiplikation mit einem hierzu aus einer Tankkennlinie (nicht dargestellt) entnommenen Faktor das Flüssigkeitsvolumen und hieraus durch Multiplikation mit der aus der Temperaturverteilung abgeleiteten Dichte die Flüssigkeitsmenge bestimmt werden. Die Impulsdauer der Schallimpulse wird bei geringen Füllhöhen zweckmäßigerweise kleiner gewählt als bei Füllhöhen nahe einer maximal zulässigen Füllhöhe, wie bereits erläutert. Bei der Durchführung des Verfahrens wirkt sich das Meßrohr 24 insofern vorteilhaft aus, als Rückwirkungen von Oberflächenbewegungen der Flüssigkeit 10 auf den Füllstand in dem ersten Schallführungsrohr 4 durch dieses selbst und durch Mehrfachmessungen minimiert werden können.

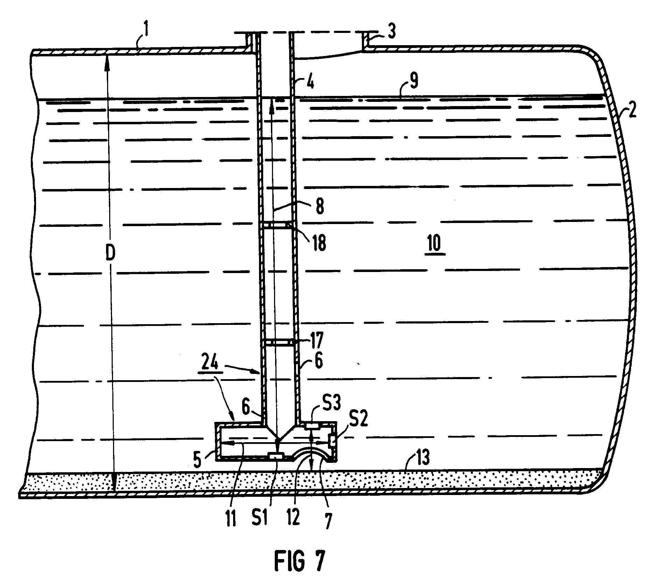

FIG 7 dient noch zur Illustration einer vorteilhaften Verwendung. In dieser Figur, welche im Vergleich zu FIG 1 vereinfacht ist, sind über die Füllstandshöhe verteilte Meßblenden oder Bezugs-Reflektoren 17,18 am Innenumfang des ersten Schallführungsrohres 4 installiert. Das hier dargestellte, insgesamt mit 24 bezeichnete Meßrohr, welches wieder eine Kombination aus dem ersten und dem zweiten Schallführungsrohr ist, dient zur Unterbringung und Halterung eines oder mehrere Schallimpulssender und -empfänger S1,S2,S3 sowie der Bezugs-Reflektoren 17 und 18 einer Füllstandsmeßeinrichtung, bei welcher die Bezugs-Reflektoren über die Füllstandshöhe mit definiertem Abstand untereinander und zu den Schallimpulssendern und -empfängern S1 angeordnet sind, wobei die an den Bezugs-Reflektoren 17,18 reflektierten Ultraschallimpulse Laufzeitdifferenzen ergeben, die zusammen mit den zugehörigen bekannten Schallweglängen die Ermittlung einer durchschnittlichen, die Dichte im Flüssigkeitsvolumen 10 berücksichtigenden Schallgeschwindigkeit ermöglichen. Aus der durchschnittlichen Schallgeschwindigkeit und aus der auf die Flüssigkeitsoberfläche bezogene Laufzeitdifferenz der jeweiligen Ultraschall-Meßstrahlen kann dann die Füllstandshöhe ermittelt werden.

## Patentansprüche

1. Füllstandsmeßeinrichtung für mit einer Flüssigkeit gefüllte Behälter (20) mit Bestimmung der Füllstandahöhe h aus der Schallaufzeit von Ultraschallimpulsen, bei der

   a) eine Hauptmeßstrecke (8) vom Bodenbereich des Behälters (20) bis zur Flüssigkeitsoberfläche (9,9') reicht,

   b) ein erster Schallimpulssender (S1) vorhanden ist, der die Hauptmeßstrecke (8) abstrahlt und ein erster Schallimpulsempfänger (S1) vorhanden ist, der die von der Flüssigkeitsoberfläche (9,9')reflektierten Schallimpulse nach einer dem Flüssigkeitsfüllstand entsprechenden Laufzeit $t_H$ aufnimmt,

   c) über die Füllstandshähe h verteilte Mittel (14, 15, 16) zur Erfassung der Temperatur vorgesehen sind, die einer Temperaturmeßwert-Auswerteeinheit (49) zugeordnet sind, deren Ausgangsgröße eine mittlere Temperatur $T_M$ im Flüssigkeitsvolumen ist,

   d) eine im Flüssigkeitsvolumen befindliche Referenzstrecke (11) mit bekannter Länge zusätzlich zur Hauptmeßstrecke (8) vorgesehen ist,

   e) ein zweiter Schallimpulssender (S2) vorhanden ist, der die Referenzstrecke (11) abstrahlt und ein zweiter Schallimpulsempfänger (S2) vorhanden ist, der die von der Referenzstrecke (11) reflektierten Schallimpulse nach einer Laufzeit $\Delta t^*$ aufnimmt,

f) an der Referenzstrecke (11) wenigstens ein Temperatursensor (14) vorgesehen ist, der der Temperaturmeßwert-Auswerteeinheit (49) zugeordnet ist und zur Erfassung der Temperatur dient, wobei die Ausgangsgröße eine Referenztemperatur $T_{Ref}$ in einem mit dem übrigen Flüssigkeitsvolumen in Temperaturaustausch stehendem Flüssigkeitsteilvolumen entlang der Referenzstrecke (11) ist, und

g) eine Mikroprozessor-Einheit (55) vorgesehen ist, die aus $\Delta t^*$ eine Schallgeschwindigkeit $v^*(T_{Ref})$, eine temperaturkorrigierte Schallgeschwindigkeit $v(T)$ im Flüssigkeitsvolumen und damit eine temperatur-korrigierte Füllstandshöhe $h(T)$ gemäß folgender Formeln bestimmt:

$$v(T) \;=\; v^* (T_{Ref}) \cdot [1 + K_K \cdot \Delta T] \text{ und } h(T) \;=\; v(T) \cdot t_H,$$

worin $\Delta T = T_M - T_{Ref}$; $K_K = v(T_1) - v(T_0) / (v(T_0) \cdot \Delta T^*)$ ;

$\Delta T^* = T_1 - T_0$, wobei $T_0, T_1$ zwei unterschiedliche an der Referenzstrecke (11) gemessene Temperaturen und $v(T_0), v(T_1)$ die zugehörigen mit der Referenzstrecke (11) gemessenen Schallgeschwindigkeiten sind sowie $K_K$ ein Korrekturfaktor ist, der aufgrund der Messungen von $T_0, T_1, v(T_0), v(T_1)$ die normierte Änderung der Schallgeschwindigkeit pro Grad Temperaturänderung des Flüssigkeitsvolumens angibt.

2. Füllstandsmeßeinrichtung nach Anspruch 1, **dadurch gekennzeichnet**, daß die Mittel zur Erfassung der Temperaturverteilung Temperatursensoren (14,15,16) umfassen, welche an mehreren über die Füllstandshöhe verteilten Meßstellen angeordnet sind und aus deren Temperatur-Meßwerten (TSO,TSM,TSU) durch Mittelwertbildung die mittlere Temperatur (TM) des Flüssigkeitsvolumens ableitbar ist.

3. Füllstandsmeßeinrichtung nach Anspruch 2, **dadurch gekennzeichnet**, daß die Mittel zur Erfassung der Temperaturverteilung mindestens je einen Temperatursensor (14,15,16), angeordnet in Bodennähe (14), bei etwa einem Drittel (15) sowie bei etwa zwei Dritteln (16) der maximalen Füllstandshöhe des Behälters, umfassen.

4. Füllstandsmeßeinrichtung nach einem der Ansprüche 1 bis 3, **gekennzeichnet** durch ein vertikal ausgerichtetes erstes Schallführungsrohr (4) für die Hauptmeßstrecke (8), welches vom Bodenbereich des Behälters (20) bis zu einer Höhe reicht, die sich oberhalb des höchsten Füllstandes h befindet, daß das Innere des ersten Schallführungsrohres (4) über Öffnungen (6) mit dem übrigen Flüssigkeitsvolumen des Behälters (20) kommuniziert und daß am unteren Ende des ersten Schallführungsrohres (4) ein erster Schallimpulssender (S1) zum Aussenden eines Ultraschallstrahles in Richtung auf die Oberfläche (9,9') des Flüssigkeitsvolumens und ein erster Schallimpulsempfänger (S1) zum Empfang des an der Oberfläche (9,9') reflektierten Ultraschallstrahls angeordnet sind.

5. Füllstandsmeßeinrichtung nach einem der Ansprüche 2 bis 4, **dadurch gekennzeichnet**, daß die Temperatursensoren (15,16) außen am ersten Schallführungsrohr (4) befestigt sind.

6. Füllstandsmeßeinrichtung nach einem der Ansprüche 1 bis 5, **dadurch gekennzeichnet**, daß der Referenzstrecke (11) ein eigenes zweites Schallführungsrohr (5) zugeordnet ist, an welchem die zweiten Schallimpulssender (S2) und -empfänger sowie der wenigstens eine Referenztemperatursensor (14) befestigt sind und dessen Inneres über wenigstens eine Öffnung (7) mit dem übrigen Flüssigkeitsvolumen kommuniziert.

7. Flüssigkeitsmeßeinrichtung nach Anspruch 6, **dadurch gekennzeichnet**, daß das zweite Schallführungsrohr (5) für die Referenzstrecke (11) als ein nahe dem Boden des Behälters (20) angeordnetes Querrohr ausgebildet ist.

8. Füllstandsmeßeinrichtung nach Anspruch 7, **dadurch gekennzeichnet**, daß das erste Schallführungsrohr (4) für die Hauptmeßstrecke (8) an seinem unteren Ende mit dem Querrohr (5) für die Referenzstrecke (11) zu einem T-förmigen, durchgehend hohlen Meßrohr (24) baulich vereinigt ist.

9. Füllstandsmeßeinrichtung nach Anspruch 8, **dadurch gekennzeichnet**, daß ein Sende-/Empfangs-Prüfkopf für die ersten Schallimpulssender und -empfänger (S1) in Flucht mit der Längsachse der Hauptmeßstrecke am Innenumfang der Querrohrwand befestigt ist, welcher Ultraschallstrahlen von unten nach oben sendet und die an der Flüssigkeitsoberfläche (9,9') reflektierten von oben nach unten gerichteten Ultraschallstrahlen empfängt.

EP 0 489 051 B1

**10.** Füllstandsmeßeinrichtung nach Anspruch 8 oder 9, **dadurch gekennzeichnet**, daß zur Bestimmung des Pegels (13) eines von Fremdflüssigkeiten und Verschmutzungen gebildeten Sumpfes unterhalb der Flüssigkeit (10) im Behälter ein dritter Schallimpulssender (S3) und dritter Schallimpulsempfänger (S3) vorgesehen sind, die von oben nach unten senden bzw. von unten nach oben messen.

**11.** Füllstandsmeßeinrichtung nach Anspruch 10, **dadurch gekennzeichnet**, daß das Querrohr (5) an seinem einen Ende ein nach unten weisendes Schalloch (7) aufweist und in Flucht mit der Schallochachse sowie oberhalb des Schalloches ein Sende/Empfangs-Prüfkopf für den dritten Schallimpulssender und -empfänger (S3) am Querrohrinnenumfang befestigt ist.

**12.** Füllstandsmeßeinrichtung nach einem der Ansprüche 1 bis 11, **dadurch gekennzeichnet**, daß ein im oberen Behältermantelbereich angeordneter Einstiegsstutzen oder Dom (3) mit Deckelflansch (21) und ein Domdeckel (22), durch den ein in das Behälterinnere ragendes Einfüllrohr (23) für die Flüssigkeit (10) dichtend hindurchgeführt und gehalten ist, vorhanden ist und das Meßrohr (24) bzw. das erste Schallführungsrohr (4) am Einfüllrohr (23) achsparallel zu dessen Längsachse gehaltert ist und die Meß- und Stromversorgungsleitungen (25) der Temperatursensoren (14,15,16), Schallimpulssender und -empfänger (S1,S2,S3) außen am ersten Schallführungsrohr (4) verlegt und durch eine gasdichte Leitungsdurchführung (26) im Domdeckel (22) hindurch nach außen geführt sind.

**13.** Füllstandsmeßeinrichtung nach einem der Ansprüche 1 bis 12, **dadurch gekennzeichnet**, daß als Schallimpulssender und als Schallimpulsempfänger (S1,S2,S3) Piezokeramiksensoren dienen und daß die Schallaufzeiten jeweils vom Moment des Sensorkurzschlusses bis zum Auftreffen der ersten Amplitude eines Echos gemessen sind.

**14.** Füllstandsmeßeinrichtung nach Anspruch 13, **dadurch gekennzeichnet**, daß zur Erfassung der Schalllaufzeiten von einem Laufzeitzähler-Schwinger in festem Rhythmus vorgegebene Zähltakte dienen und daß die Frequenz der gesendeten Ultraschallimpulse zur Frequenz des Laufzeitzähler-Schwingers im Verhältnis 1:3 bis 1:6 steht.

**15.** Füllstandsmeßeinrichtung nach Anspruch 14, **dadurch gekennzeichnet**, daß die Frequenz der gesendeten Ultraschallimpulse 2 MHz und die Frequenz des Laufzeitzähler-Schwingers 8 MHz beträgt.

**16.** Verfahren zur Bestimmung des Füllstandes in einem mit einer Flüssigkeit (10) gefüllten Behälter (20), bei dem

a) mit einem ersten Ultraschallimpulssender und -empfänger (S1) eine dem Füllstand der Flüssigkeit (10) im Behälter (20) entsprechende Ultraschallaufzeit $t_H$ gemessen wird,

b) mittels über die Füllstandshöhe verteilten Temperatursensoren eine mittlere Temperatur $T_M$ des Flüssigkeitsvolumens abgeleitet wird,

c) mit einem zweiten Ultraschallimpulssender und -empfänger (S2) eine der bekannten Länge einer Referenzstrecke (11) entsprechende Ultraschallaufzeit $\Delta t^*$ gemessen wird,

d) an der Referenzstrecke (11) mittels wenigstens einem Temperatursensor eine Referenztemperatur $T_{Ref}$ des Flüssigkeitsteilvolumens der Referenzstrecke (11) abgeleitet wird, woraus mit $\Delta t^*$ eine Referenzschallgeschwindigkeit $v^*$ ($T_{Ref}$) abgeleitet wird,

e) an der Referenzstrecke (11) zwei unterschiedliche Temperaturen $T_0, T_1$ gemessen werden, aus denen die zugehörigen mit der Referenzstrecke (11) ermittelten Schallgeschwindigkeiten $v(T_0), v(T_1)$ abgeleitet werden und ein Korrekturfaktor $K_K$, der die normierte Änderung der Schallgeschwindigkeit pro Grad Temperaturänderung des Flüssigkeitsvolumens angibt,

gemäß $K_K = v(T_1)-v(T_0)/(v(T_0) \cdot \Delta T^*)$ mit
$\Delta T^* = T_1 - T_0$ bestimmt wird, und

f) eine temperatur-korrigierte Schallgeschwindigkeit $v(T)$ im Flüssigkeitsvolumen und damit abschließend eine temperatur-korrigierte Füllstandshöhe $h(T)$ gemäß folgender Formeln bestimmt wird:
$v(T) = v^*(T_{Ref}) \cdot [1+K_K \cdot \Delta T]$ und $h(T) = v(T) \cdot t_H$ , worin $\Delta T = T_M - T_{Ref}$ ist.

**17.** Verfahren nach Anspruch 16, **dadurch gekennzeichnet**, daß bei der Ermittlung der Füllstandshöhe $h(T)$ auch die Sumpfhöhe (b) im Behälter berücksichtigt wird und daß die die Sumpfhöhe (b) berücksichtigende Füllstandshöhe $h^*(T)$ nach folgender Gleichung ermittelt wird:
$$h^*(T) = t_H \cdot v(T) + t_S \cdot v(T) - a + b,$$
worin bedeuten:

11

$t_s$       den der Sumpfhöhe entsprechenden Teil der Laufzeitdifferenz $\Delta t_S$, die mit einem dritten Schallimpulssender und -empfänger (S3), der im bodennahen Bereich des Flüssigkeitsvolumens angeordnet ist, gemessen wird,

a       den in Höhenrichtung gemessenen Abstand zwischen den ersten und dritten Schallimpulssendern und -empfängern (S1-S3), und

b       die von den dritten Schallimpulssendern und -empfängern (S3) gemessene Sumpfhöhe.

18.   Verfahren nach Anspruch 16 oder 17, **dadurch gekennzeichnet**, daß die von den Schallimpulsempfängern (S1,S2,S3) aufgenommenen Schallimpulse in Abhängigkeit von der Schallaufzeit verstärkt werden.

19.   Verfahren nach einem der Ansprüche 16 bis 18, **dadurch gekennzeichnet**, daß aus der Füllhöhe h(T),h*(T) durch Multiplikation mit einem hierzu aus einer Tankkennlinie entnommenen Faktor das Flüssigkeitsvolumen und hieraus durch Multiplikation mit der aus der Temperaturverteilung abgeleiteten Dichte die Flüssigkeitsmenge bestimmt wird.

20.   Verfahren nach einem der Ansprüche 16 bis 19, wobei die Hauptmeßstrecke (8) innerhalb eines Schallführungsrohres (4) verläuft, **dadurch gekennzeichnet,** daß Rückwirkungen von Oberflächenbewegungen der Flüssigkeit (10) auf den Füllstand in dem Schallführungsrohr (4) durch dieses selbst und durch Mehrfachmessungen minimiert werden.

21.   Verfahren nach einem der Ansprüche 16 bis 20, **dadurch gekennzeichnet**, daß die Impulsdauer der Schallimpulse bei geringen Füllstandshöhen kleiner gewählt wird als bei Füllstandshöhen nahe einer maximal zulässigen Füllstandshöhe.

## Claims

1.   Fill level measuring device for containers (20) filled with fluid in which the fill level height h is determined from the sound transit time of ultrasound pulses, wherein

    a) a main measuring path (8) extends from the bottom region of the container (20) up to the surface (9, 9′) of the fluid,

    b) there is a first sound pulse transmitter (S1) which emits pulses along the main measuring path (8) and there is a first sound pulse receiver (S1) which receives sound pulses reflected from the surface (9, 9′) of the fluid after a transit time $t_H$ which corresponds to the fill level of the fluid,

    c) there are means (14, 15, 16) for detecting the temperature which are distributed over the fill level height h and assigned to a temperature measurement value evaluating unit (49), having an output variable which is a mean temperature $T_M$ in the fluid volume,

    d) there is a reference path (11) of known length in the fluid volume, in addition to the main measuring path (8),

    e) there is a second sound pulse transmitter (S2) which emits pulses along the reference path (11) and a second sound pulse receiver (S2) which receives the sound pulses reflected from the reference path (11) after a transit time $\Delta t^*$,

    f) there is at least one temperature sensor (14) on the reference path (11) which is assigned to the temperature measurement value evaluating unit (49) and serves to detect the temperature, the output variable being a reference temperature $T_{Ref}$ in a partial fluid volume, which is in temperature exchange with the rest of the fluid volume, along the reference path (11),

    g) there is a microprocessor unit (55) which, from $\Delta t^*$, determines a sound velocity $v^*(T_{Ref})$, a temperature-corrected sound velocity $v(T)$ in the fluid volume and, consequently, a temperature-corrected fill level height $h(T)$, according to the following formulae:

$$v(T) = v * (T_{Ref}) \cdot (1 + K_k \cdot \Delta T) \text{ and } h(T) = v(T) \cdot t_H,$$

wherein $\Delta T = T_M - T_{Ref}$ ; $K_k = v(T_1) - v(T_0)/(v(T_0) \cdot \Delta T^*)$;

$\Delta T^* = T_1 - T_0$,

wherein $T_0$, $T_1$ are two different temperatures measured on the reference path (11) and $v(T_0)$, $v(T_1)$ are the associated sound velocities measured with the reference path (11) and $K_k$ is a correction factor indicating the normalized variation in the sound velocity per degree of temperature variation of the fluid volume on the basis of the measurements of $T_0$, $T_1$, $v(T_0)$, $v(T_1)$.

2.   Fill level measuring device according to Claim 1, characterised in that the means for detecting the temperature distribution include temperature sensors (14, 15, 16), which are disposed at several measurement points distributed over the fill level height, from the temperature measurement values (TSO, TSM, TSU) of which the mean temperature TM of the fluid volume can be derived by averaging.

3. Fill level measuring device according to Claim 2, characterised in that the means for detecting the temperature distribution each include at least one temperature sensor (14, 15, 16), disposed close to the bottom (14) of the container, at approximately one third (15) and at approximately two thirds (16) of the maximum fill level height of the container.

4. Fill level measuring device according to any one of Claims 1 to 3, characterised by a vertically aligned first sound waveguide tube (4) for the main measuring path (8), which extends from the bottom region of the container (20) up to a height located above the highest fill level h, in that the interior of the first sound waveguide tube (4) communicates via openings (6) with the remaining fluid volume of the container (20) and in that at the lower end of the first sound waveguide tube (4) there is a first sound pulse transmitter (S1) for emitting an ultrasound beam towards the surface (9, 9′) of the fluid volume and a first sound pulse receiver (S1) for receiving the ultrasound beam reflected at the surface (9, 9′).

5. Fill level measuring device according to any one of Claims 2 to 4, characterised in that the temperature sensors (15, 16) are secured to the exterior of the first sound waveguide tube (4).

6. Fill level measuring device according to any one of Claims 1 to 5, characterised in that the reference path (11) has its own, second, sound waveguide tube (5), to which are secured the second sound pulse transmitters (S2) and receivers and the at least one reference temperature sensor (14) and the interior of this sound waveguide tube communicating with the remaining fluid volume via at least one opening (7).

7. Fluid measuring device according to Claim 6, characterised in that the second sound waveguide tube (5) for the reference path (11) is constructed as a transverse tube disposed near the bottom of the container (20).

8. Fill level measuring device according to Claim 7, characterised in that the lower end of the first sound waveguide tube (4) for the main measuring path (8) is structurally united with the transverse tube (5) for the reference path (11), forming a T-shaped, continuously hollow measuring tube (24).

9. Fill level measuring device according to Claim 8, characterised in that a transmit/receive test head for the first sound pulse transmitters and receivers (S1) is secured to the inner periphery of the transverse tube wall, in alignment with the longitudinal axis of the main measuring path, which transmits ultrasound beams from the bottom upwards and receives the ultrasound beams travelling from the top downwards reflected at the surface (9, 9′) of the fluid.

10. Fill level measuring device according to either of Claims 8 or 9, characterised in that for the purpose of determining the level (13) of a sump formed by foreign fluids and contaminants below the fluid (10) in the container, there is a third sound pulse transmitter (S3) and a third sound pulse receiver (S3), respectively transmitting from the top downwards and receiving from the bottom upwards.

11. Fill level measuring device according to Claim 10, characterised in that one end of the transverse tube (5) has a downwardly pointing sound hole (7) and a transmit/receive test head for the third sound pulse transmitter and receiver (S3) is secured to the inner periphery of the transverse tube, in alignment with the axis of the sound hole and above the sound hole.

12. Fill level measuring device according to any one of Claims 1 to 11, characterised in that disposed in the upper region of the container casing there is an access pipe or dome (3) with a cover flange (21) and a dome cover (22) through which a filler tube (23) for the fluid (10), extending into the interior of the container, is ducted and retained so as to form a seal, and the measuring tube (24) or the first sound waveguide tube (4) is retained on and axially parallel to the longitudinal axis of the filler tube (23) and the measurement and current supply lines (25) of the temperature sensors (14, 15, 16) and sound pulse transmitters and receivers (S1, S2, S3) are disposed on the exterior of the first sound waveguide tube (4) and ducted outwards through a gas-tight line duct (26) in the dome cover (22).

13. Fill level measuring device according to any one of Claims 1 to 12, characterised in that the sound pulse transmitters and receivers (S1, S2, S3) used are piezoceramic sensors and that their sound transit times are each measured from the moment of the sensor short-circuit until the arrival of the first amplitude of an echo.

14. Fill level measuring device according to Claim 13, characterised in that predefined counting clock pulses are used for detection of the sound transit times by a transit time counter-oscillator at a fixed rhythm and that the frequency of the transmitted ultrasound pulses is in the ratio of 1:3 to 1:6 to the frequency of the transit time counter-oscillator.

15. Fill level measuring device according to Claim 14, characterised in that the frequency of the transmitted ultrasound pulses is 2 MHz and the frequency of the transit time counter-oscillator is 8 MHz.

16. Method for determining the fill level in a container (20) filled with fluid (10) in which

   a) an ultrasound transit time $t_H$, corresponding to the fill level of the fluid (10) in the container (20), is measured by means of a first ultrasound pulse transmitter and receiver (S1),

   b) a mean temperature $T_M$ of the fluid volume is derived by means of temperature sensors distributed over the fill level height,

   c) an ultrasound transit time $\Delta t^*$, corresponding to the known length of a reference path (11), is measured by means of a second ultrasound pulse transmitter and receiver (S2),

   d) a reference temperature $T_{Ref}$ of the fluid volume of the reference path (11) is derived on the reference path (11) by means of at least one temperature sensor, a reference sound velocity $v^*(T_{Ref})$ being derived therefrom using $\Delta t^*$,

   e) two different temperatures $T_0$, $T_1$ are measured on the reference path (11), from which are derived the associated sound velocities $v(T_0)$, $v(T_1)$ ascertained with the reference path (11) and there is ascertained a correction factor $K_k$, which indicates the normalized variation in the sound velocity per degree of temperature variation of the fluid volume, according to

   $$K_k = v(T_1) - v(T_0) / (v(t_0) \cdot \Delta T^*)$$

   with

   $$AT^* = T_1 - T_0,$$

   and

   f) there is ascertained a temperature-corrected sound velocity $v(T)$ in the fluid volume and, finally therefore, a temperature-corrected fill level height $h(T)$, according to the following formulae:

   $$v(T) = v^*(T_{Ref}) \cdot (1 + K_k \cdot \Delta T)$$

   and

   $$h(T) = v(T) \cdot t_H, \text{ wherein } \Delta T = T_M - T_{Ref}.$$

17. Method according to Claim 16, characterised in that the sump height (b) in the container is also taken into account in the ascertainment of the fill level height $h(T)$ and that the fill level height $h^*(T)$ taking the sump height (b) into account is ascertained according to the following equation:

   $$h^*(T) = t_H \cdot v(T) + t_s \cdot v(T) = a + b,$$

   wherein:

   $t_s$      denotes the portion of the transit time difference $\Delta t_s$ corresponding to the sump height, being measured with a third sound pulse transmitter and receiver (S3) disposed in the region near the bottom of the fluid volume,

   a      denotes the distance measured vertically between the first and the third sound pulse transmitters and receivers (S1-S3), and

   b      denotes the sump height measured by the third sound pulse transmitters and receivers (S3).

18. Method according to either of Claims 16 or 17, characterised in that the sound pulses received by the sound pulse receivers (S1, S2, S3) are amplified as a function of the sound transit time.

19. Method according to any one of Claims 16 to 18, characterised in that the fluid volume is determined from the fill level $h(T)$, $h^*(T)$, by multiplication by a factor taken for this purpose from a tank characteristic curve, and from this is determined the fluid quantity by multiplication by the density derived from the temperature distribution.

20. Method according to any one of Claims 16 to 19, wherein the main measuring path (8) runs within a sound waveguide tube (4), characterised in that feedback from surface motions of the fluid (10) upon the fill level in the sound waveguide tube (4) is minimised by the sound waveguide tube itself and by multiple measurements.

21. Method according to any one of Claims 16 to 20, characterised in that the pulse duration of the sound pulses is selected to be less when the fill levels are less, than when the fill levels are near a maximum allowable fill level.

## Revendications

1. Dispositif de mesure de niveau pour récipients (20) remplis d'un liquide avec détermination du niveau h à partir du temps de propagation du son d'impulsions ultrasonores, selon lequel

   a) une distance de mesure principale (8) s'étend du fond du récipient (20) jusqu'à la surface de liquide (9, 9'),

   b) il existe un premier émetteur d'impulsions sonores (S1), qui rayonne la distance de mesure principale (8) et un premier récepteur d'impulsions sonores (S1), qui réceptionne les impulsions sonores réfléchies par la surface de liquide (9, 9') après un temps de propagation $t_H$ correspondant au niveau de liquide,

   c) sont prévus des moyens (14, 15, 16) répartis sur le niveau h et destinés à mesurer la température, qui sont associés à une unité d'analyse de valeurs mesurées de température (49), dont la grandeur de sortie est une température moyenne $T_M$ dans le volume de liquide,

   d) est prévue dans le volume de liquide, en plus de la distance de mesure principale (8), une distance de référence (11) de longueur connue,

   e) il existe un deuxième émetteur d'impulsions sonores (S2), qui rayonne la distance de référence (11) et un deuxième récepteur d'impulsions sonores (S2), qui réceptionne les impulsions sonores réfléchies par la distance de référence (11) après un temps de propagation $\Delta t^*$,

   f) est prévu au niveau de la distance de référence (11) au moins un palpeur de température (14) qui est associé à l'unité d'analyse de valeurs mesurées de température (49) et sert à mesurer la température, la grandeur de départ étant une température de référence $T_{Ref}$ dans un volume de liquide partiel qui se trouve en échange de température avec le volume de liquide restant le long de la distance de référence (11), et selon lequel

   g) est prévue une unité-microprocesseur (55) qui détermine à partir de $\Delta t^*$ une vitesse du son $v^*(T_{Ref})$, une vitesse du son corrigée en température $v(T)$ dans le volume de liquide et donc un niveau corrigé en température $h(T)$ selon les formules suivantes:

   $$v(T) = v^*(T_{Ref}) \cdot [1 + K_K \cdot \Delta T] \text{ et } h(T) = v(T) \cdot t_H,$$

   où

   $$\Delta T = T_M - T_{Ref} ; K_K = v(T_1) - v(T_0)/(v(T_0) \cdot \Delta T^*) ;$$
   $$\Delta T^* = T_1 - T_0,$$

   $T_0$, $T_1$ étant deux températures différentes mesurées à la distance de référence (11), $v(T_0)$, $v(T_1)$ les vitesses du son associées mesurées avec la distance de référence (11) et $K_k$ un facteur de correction qui en raison des mesures de $T_0$, $T_1$, $v(T_0)$, $v(T_1)$ indique le changement normalisé de la vitesse du son par degré de changement de température du volume de liquide.

2. Dispositif de mesure de niveau selon la revendication 1, caractérisé en ce que les moyens pour détecter le champ de température comportent des palpeurs de température (14, 15, 16), lesquels sont placés à plusieurs endroits répartis sur le niveau et dont les valeurs mesurées de température (TSO, TSM, TSU) permettent, en établissant la moyenne, de déterminer la température moyenne (Tm) du volume de liquide.

3. Dispositif de mesure de niveau selon la revendication 2, caractérisé en ce que les moyens pour détecter le champ de température comportent respectivement au moins un palpeur de température (14, 15, 16) disposé à proximité du fond (14), à environ un tiers (15) et à environ deux tiers (16) du niveau maximal du récipient.

4. Dispositif de mesure de niveau selon l'une des revendications 1 à 3, caractérisé par un premier tube conducteur de son (4) orienté verticalement et destiné à la distance de mesure principale (8), lequel s'étend du fond du récipient (20) jusqu'à une hauteur située au-dessus du niveau h maximal, en ce que l'intérieur du premier tube conducteur de son (4) communique par l'intermédiaire d'ouvertures (6) avec

15

EP 0 489 051 B1

le volume de liquide restant du récipient (20) et en ce qu'à l'extrémité inférieure du premier tube conducteur de son (4) sont disposés un premier émetteur d'impulsions sonores (S1) destiné à émettre un rayon ultrasonore en direction de la surface (9, 9') du volume de liquide et un premier récepteur d'impulsions sonores (S1) destiné à réceptionner le rayon ultrasonore réfléchi à la surface (9, 9').

5.  Dispositif de mesure de niveau selon l'une des revendications 2 à 4, caractérisé en ce que les palpeurs de température (15, 16) sont fixés sur la face externe du premier tube conducteur (4).

6.  Dispositif de mesure de niveau selon l'une des revendications 1 à 5, caractérisé en ce qu'un deuxième tube conducteur de son (5) est affecté exclusivement à la distance de référence (11), sur lequel sont fixés le deuxième émetteur (S2) et le deuxième récepteur d'impulsions sonores et au moins l'un des palpeurs de température (14), et dont l'intérieur communique avec le volume de liquide restant par l'intermédiaire d'au moins une ouverture (7).

7.  Dispositif de mesure de liquide selon la revendication 6, caractérisé en ce que le deuxième tube conducteur de son (5) destiné à la distance de référence (11) se présente sous forme de tube transversal disposé à proximité du fond du récipient (20).

8.  Dispositif de mesure de niveau selon la revendication 7, caractérisé en ce que le premier tube conducteur de son (4) destiné à la distance de mesure principale (8) communique à son extrémité inférieure avec le tube transversal (5) destiné à la distance de référence (11) pour en former un tube de mesure (24) en forme de T qui est creux de bout en bout.

9.  Dispositif de mesure de niveau selon la revendication 8, caractérisé en ce qu'une tête de mesure d'émission et de réception destinée au premier émetteur et au premier récepteur d'impulsions sonores (S1) est fixée à la circonférence intérieure de la paroi du tube transversal, en alignement avec l'axe longitudinal de la distance de mesure principale, laquelle tête émet des rayons ultrasonores du bas vers le haut et réceptionne les rayons ultrasonores réfléchis à la surface de liquide (9, 9'), qui sont dirigés du haut vers le bas.

10. Dispositif de mesure de niveau selon la revendication 8 ou 9, caractérisé en ce qu'en vue de déterminer le niveau (13) d'un résidu formé par des liquides étrangers et des impuretés au-dessous du liquide (10) dans le récipient, un troisième émetteur d'impulsion sonores (S3) et un troisième récepteur d'impulsions sonores (S3) sont prévus qui émettent du haut vers le bas resp. mesurent du bas vers le haut.

11. Dispositif de mesure de niveau selon la revendication 10, caractérisé en ce que le tube transversal (5) présente à l'une de ses extrémités une ouïe (7) orientée vers le bas et en ce qu'une tête de mesure d'émission et de réception, destinée au troisième émetteur et récepteur d'impulsions sonores (S3), est fixée en alignement avec l'axe de l'ouïe et au-dessus de l'ouïe à la circonférence intérieure du tube transversal.

12. Dispositif de mesure de niveau selon l'une des revendications 1 à 11, caractérisé en ce qu'il existe une tubulure d'accès ou un dôme (3) comportant une bride d'obturation (21), qui est disposée dans la partie supérieure de l'enveloppe de récipient, et un couvercle de dôme (22), à travers lequel est introduit et maintenu de manière étanche un tube de remplissage (23) pour le liquide (10), qui s'avance dans l'intérieur du récipient, et en ce que le tube de mesure (24) respectivement le premier tube conducteur sonore (4) est fixé au tube de remplissage (23) de manière à ce que son axe soit parallèle à l'axe de celui-ci et en ce que les câbles de mesure et d'alimentation électrique (25) des palpeurs de température (14, 15, 16), émetteurs et récepteurs d'impulsions sonores (S1, S2, S3) sont montés à l'extérieur du premier tube conducteur sonore (4) et amenés vers l'extérieur à travers une douille de passage de câbles (26) dans le couvercle de dôme (22).

13. Dispositif de mesure de niveau selon l'une des revendications 1 à 12, caractérisé en ce que des palpeurs piézocéramiques servent d'émetteurs d'impulsions sonores et de récepteurs d'impulsions sonores (S1, S2, S3) et en ce que les temps de propagation du son sont mesurés chaque fois à partir du moment du court-circuit des capteurs jusqu'à l'apparition de la première amplitude d'un écho.

14. Dispositif de mesure de niveau selon la revendication 13, caractérisé en ce que des cadences imposées en rythme régulier par un transducteur de comptage de temps de propagation servent à déterminer les

16

temps de propagation du son et en ce que le rapport fréquence des impulsions ultrasonores émises/fréquence du transducteur de comptage de temps de propagation est compris entre 1:3 et 1:6.

15. Dispositif de mesure de niveau selon la revendication 14, caractérisé en ce que la fréquence des impulsions ultrasonores émises est de 2 MHz et la fréquence du transducteur de comptage de temps de propagation de 8 MHz.

16. Procédé pour déterminer le niveau dans un récipient (20) rempli d'un liquide (10), selon lequel

a) on mesure avec un premier émetteur et récepteur d'impulsions ultrasonores (S1) un temps de propagation d'ultrasons $t_H$ correspondant au niveau du liquide (10) dans le récipient (20),

b) on déduit au moyen de palpeurs de température répartis sur le niveau une température moyenne $T_M$ du volume de liquide,

c) on mesure avec un deuxième émetteur et récepteur d'impulsions ultrasonores (S2) un temps de propagation d'ultrasons $\Delta t^*$ correspondant à la longueur connue d'une distance de référence (11),

d) on déduit à la distance de référence (11), au moyen d'au moins un palpeur de température, une température de référence $T_{Ref}$ du volume de liquide partiel de la distance de référence (11), de laquelle on déduit avec $\Delta t^*$ une vitesse du son de référence $v^*$ $(T_{Ref})$,

e) on mesure à la distance de référence (11) deux températures différentes $T_0$, $T_1$, desquelles on déduit les vitesses du son $v(T_0)$, $v(T_1)$ correspondantes établies avec la distance de référence (11), et on détermine un facteur de correction $K_K$ qui indique le changement normalisé de la vitesse du son par degré de changement de température du volume de liquide, selon

$$K_K = v(T_1) - v(T_0) / (v(T_0). \Delta T^*),$$

où

$$\Delta T^* = T_1 - T_0,$$

et

f) on détermine une vitesse du son corrigée en température $v(T)$ dans le volume de liquide et pour finir un niveau corrigé en température $h(T)$ selon les formules:

$$v(T) = v^*(T_{Ref}).[1 + K_K.\Delta T] \text{ et } h(T) = v(T).t_H,$$

où

$$\Delta T = T_M - T_{Ref}.$$

17. Procédé selon la revendication 16, caractérisé en ce que lorsqu'on détermine la hauteur de niveau $h(T)$, on tient également compte de la hauteur de résidus (b) dans le récipient et en ce qu'on détermine la hauteur de niveau $h^*(T)$ tenant compte de la hauteur de résidus (b) selon l'équation suivante:

$$h^*(T) = t_H . v(T) + t_s . v(T) - a + b;$$

où

$t_s$ est la part de la différence de temps de propagation $\Delta t_s$ correspondant à la hauteur de résidus, laquelle différence est mesurée avec un troisième émetteur et récepteur d'impulsions sonores (S3) disposé dans la partie du volume de liquide située à proximité du fond,

a est la distance mesurée dans le sens de la hauteur entre les premiers et troisièmes émetteurs et récepteurs d'impulsions sonores (S1 - S3), et

b est la hauteur de résidus mesurée par les troisièmes émetteurs et récepteurs d'impulsions sonores (S3).

18. Procédé selon la revendication 16 ou 17, caractérisé en ce que les impulsions sonores réceptionnées par les récepteurs d'impulsions sonores (S1, S2, S3) sont amplifiées en fonction du temps de propagation du son.

19. Procédé selon l'une des revendications 16 à 18, caractérisé en ce que l'on détermine, à partir de la hauteur de niveau $h(T)$, $h^*(T)$, par multiplication avec un facteur pris à cet effet sur une caractéristique de la cuve, le volume de liquide, et à partir de celui-ci, par multiplication avec la densité déduite du champ de température, la quantité de liquide.

20. Procédé selon l'une des revendications 16 à 19, selon lequel la distance de mesure principale (8) passe à l'intérieur d'un tube conducteur de son (4), caractérisé en ce que des répercussions de mouvements de surface du liquide (10) sur le niveau sont minimisées dans le tube conducteur de son (4) par celui-ci même et par des mesures multiples.

21. Procédé selon l'une des revendications 16 à 20, caractérisé en ce que l'on choisit la durée d'impulsion en présence de niveaux faibles plus courte qu'en présence de niveaux proches d'un niveau maximal admissible.

1710mm
49°C

FIG 1

FIG 2

FIG 3

FIG 4

FIG 5

FIG 6

FIG 7